# EUROPEAN PATENT APPLICATION

(11) **EP 2 587 858 A1**
(43) Date of publication of application: **01.05.2013**
(21) Application number: 11187179.4
(22) Date of filing: 28.10.2011
(51) Int. Cl.: H04W 28/02, H04L 12/70

(54) **A process for routing communication data in a communication network, and module in said communication network**

(30) Priority: 28.10.2011 IN II25782010
(71) Applicant: Alcatel Lucent, 75007 Paris (FR)
(72) Inventor: Rajapandiyan, Karthick, 600032 Chennai (IN); Muthiah, Muthusamy, 600032 Chennai (IN)
(74) Representative: Sciaux, Edmond

(57) **Abstract**

A process for routing communication data in a communication network comprising a proximal communication network and a distal communication network, wherein said distal communication network comprises at least one network parameter, said process comprising the steps of receiving a communication request for transmitting communication data from said proximal network to said distal network; and transmitting said communication data from said proximal network to said distal network at least in function of said network parameter of said distal network.

## Description

The present invention concerns a process and a device module for selectively routing communication data in a communication network based upon network conditions detected in the distal part of the communication network.

### BACKGROUND

This section introduces aspects that may be helpful in facilitating a better understanding of the invention. Accordingly, the statements of this section are to be read in this light and are not to be understood as admissions about what is in the prior art or what is not in the prior art.

When a first party A wishes to make a communication attempt to party B, party A makes a communication request to his gateway (in the case of a GSM-type communication network) or his S-CSCF (in the case of an IMS network), to be processed and routed appropriately around the network.

At times, network congestion or technical problems may reduce communication-carrying capacity on the network, such that there may be many renewed attempts for a communication in a very short time, by many different users, to overload at least a localized zone of the communication network.

Therefore, it is possible that parts of a communication network go down from being overloaded with repeated communication attempts by subscribers.

A solution is sought to better address this situation.

### BRIEF SUMMARY

An object of the present is therefore a process for routing communication data according to claim 1.

Another object is a module in a communication network according to claim 7.

Yet a further object is a communication network according to claim 11.

An advantage of these embodiments is to prevent unnecessary network traffic when it is possible to predict a suitable failure criterion such as a high probability of failure, that may for example aggravate existing network conditions.

Contrary to presently existing methods, the present invention solves the problem in an innovative way by using the remote network ("distal communication network") conditions, rather than local network conditions.

### BRIEF DESCRIPTION

Some embodiments of devices and methods in accordance with embodiments of the present invention are now described, by way of example only, and with reference to the accompanying drawings, in which:
- Figure 1 illustrates a schematic illustration of a communication network according to an embodiment of the invention, and
- Figure 2 illustrates an embodiment of the control module of figure 1.

### DETAILED DESCRIPTION

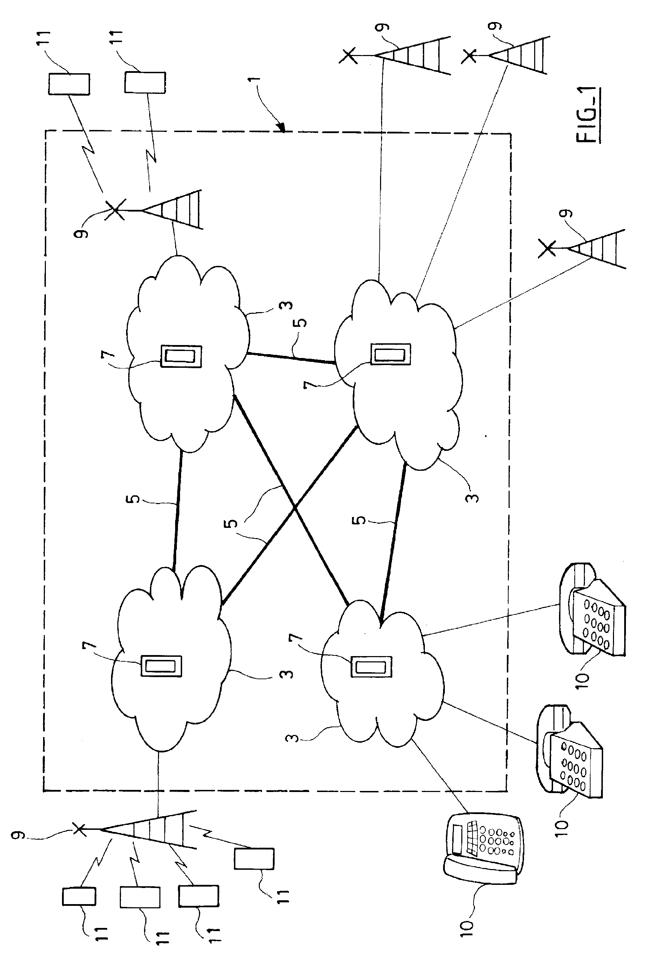

Figure 1 illustrates a communication network 1 according to a first exemplary embodiment of the invention.

In particular, according to the embodiment in question, the communication network 1 comprise a plurality of local communication networks 3, each referenced non-limitingly 'a' through 'd' on figure 1. Each local communication network 3 may be geographically, functionally, or volumetrically separated from each other. For example, the communication network 1 may be a wired telecommunication network, for example POTS network, PSTN network, MGC network, internet network, computer data networks and/or wireless networks, for example, IMS network, GSM, 3G, LTE networks.

Each local communication network 3 may be either of or both of an initiating network, in that the users connected to the local communication network initiate communication sessions, or a receiving network, in that users connected to the local communication network receive communication sessions. Let us again, for the sake of convenience, designate a local communication network initiating a communication session (ie. "a call") to be a "proximate communication network", and a local communication network receiving a communication session to be a "distal communication network".

Each local communication networks 3 is connected to other local communication networks 3 by communication links 5, either directly or indirectly. For example, local communication network 3a is connected by communication link 5 directly to local communication network 3b, but is connected indirectly via local communication network 3c to local communication network 3d.

For the purpose of describing an embodiment in the present description, let us limit ourselves to the case of a communication network 1 being a wireless telecommunication network using the IP Multimedia Subsystem (IMS) architecture in part or entirely.

Each local communication network 3, or local IMS network 3, may comprise one or more control servers, known as CSCFs (call session control functions) to manage user call function such as session control, feature control, and resource allocation. There are typically three types of CSCF's present in an IMS network: Proxy CSCF (P-CSCF), interrogating CSCF (I-CSCF), and Serving CSCF (S-CSCF). The IMS architecture is well known, and will not be further detailed for now.

Each local communication network 3 is connected to an access network or an access point, here represented by a wireless antenna 9 at local communication network 3a, 3b, and 3c, or by a plain old telephone service (POTS) at local communication network 3d.

A plurality of terminal devices 11 are used directly by respective end-users to communicate on the communication network 1 via the access points 9 or the POTS 10.

The terminal devices 11 may:
- initiate a communication session, in which case the local communication network through which it is connected to the communication network 1 acts as the proximal communication network; and/or
- receive a communication session, in which case the local communication network through which it is connected to the communication network 1 acts as the distal communication network.

A control module 7 is implanted in each local communication network 3, or, more specifically, a control module 7 is implanted in each proximate communication network 3 ― ie. only in the local communication networks adapted to initiate communication sessions. For example, the control module 7 is associated with the Proxy CSCF of the proximate local communication network 3.

The control module 7 may take the form of an CSCF element, application element in the IMS architecture (or Analog signaling (ASS) element, Digital Subscriber System (DSS) Signaling element, ISDN User part (ISUP) signaling element in PSTN network or MGC network Architecture, depending on the network 1 architecture), or indeed any control module that handles the communication request and response in a communication network architecture.

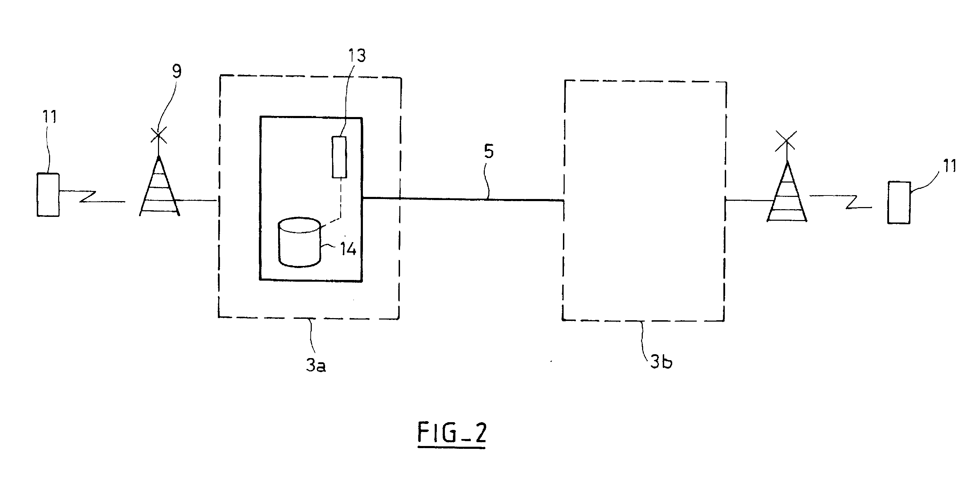

Turning to figure 2, the control module 7 comprises processing means 13 adapted:
- to receive and interpret all communication sessions from terminal device 11;
- extract the distal communication network information from the communication session header;
- determine a network parameter in the distal communication network;
- transfer the communication session from the proximate terminal device 11, to the distal terminal device 11, via the distal communication network 3, depending upon the determined network parameter, and using the preexisting transmission means of the proximal communication network 3.

The control module 7 may determine the following, non-limiting, network parameters in the distal communication network:
- network congestion indicators,
- network failure indication, for example 4XX or 5XX error message codes in IMS communication networks, and/or
- a success criteria of past communications (for example, unsuccessful call attempts) effected between the same proximal communication network and the same distal communication network.

As such, the processor 13 is adapted to, depending upon the circumstance, to determine a network parameter from :
- an instantaneous probe of the status of distal communication network, by means of test call from proximal communication to the distal communication network.
- historical data of communication sessions.

The control module 7 may comprise a storage database 14 to store historical data of communication sessions for the purposes of determining network parameter from historical data.

A description of the operation of the foregoing embodiment will now be described. For the purposes of the following description, let us assume that terminals 11 (referred to as terminals 11a) are connected to a local communication network 3a acting as the proximate communication network, and that terminals 11 (referred to as terminals 11 b) are connected to local communication network 3b acting as the distal communication network.

When terminals 11a initiate a communication session having for destination terminals 11 b in distal communication network 3b, terminal 11a sends an "INVITE" request via the P-CSCF of proximate communication network 3a, in accordance with standing standard definitions of IMS architecture. Control module 7, associated with P-CSCF in proximate communication network 3a, detects communication attempt, and extracts the header information of the communication session to determine that the communication session is destined towards distal communication network 3b.

The control module 7 then interrogates historical data, for example in storage database 14 for previously-detected network failures in the distal communication network 3b.

If no such network failures are detected, the P-CSCF routes the call to the distal communication network 3b according to existing procedures and protocols.

If a network failure is detected, the control module 7 terminates the communication session and for example returns a message 503 "Service Unavailable ― Please try again later" to the proximate terminal 11 a.

The control module 7 is thus configured to terminate communication sessions based on determined network failures occurring in a predetermined interval prior to the instant communication, such that the proximate terminal 11 a is barred from perhaps further amplifying the cause of the network failure for a set time from the detection of network failure in the distal communication network. The barred interval may for example be set for all errors, or be varying according to the error type, and thus the seriousness of the network failure.

For example, if an error occurred less than 15 minutes before the communication session in question, then the control module 7 will terminate said communication session and prevent the proximate terminal 11 a from making the same communication attempt until the 15 minute interval is past.

In another embodiment, when terminal 11 a initiates a communication session having for destination terminals 11 b in distal communication network 3b, and control module 7 detects communication attempt, the control module 7 may instantaneously or on a periodic basis probe network parameters in the distal communication network 3b. Depending upon the success of the probe by the control module 7, the control module 7 will allow the connection of the communication session between terminal 11 a and terminal 11 b, as described hereabove.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-execatable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A process for routing communication data in a communication network comprising a proximal communication network and a distal communication network, wherein said distal communication network comprises at least one network parameter, said process comprising the steps of:
- receiving a communication request for transmitting communication data from said proximal network to said distal network;
- transmitting said communication data from said proximal network to said distal network at least in function of said network parameter of said distal network.

2. A process according to claim 1, wherein the network parameter is a network failure indicator.

3. A process according to claim 2, whereby the distal communication network failure indicator is determined by an instantaneous or a periodic probe of the network failure indicator in the distal communication network.

4. A process according to claim 1, wherein the network parameter is a success criterion of historical communication transmissions effected between said proximal communication network and said distal communication network.

5. A process according to any one of the preceding claims, further comprising the step of applying a delay parameter to the transmission of the communication request if said initial communication request is denied, such that any communication request between the same proximal communication network and the same distal communication network is automatically denied until said delay parameter has expired.

6. A computer programme adapted for executing the process according to any one claims 1 to 5 when executed on a computer processor.

7. A data carrier carrying a computer programme adapted for executing the process according to any one claims 1 to 5 when executed on a computer processor.

8. A module in a communication network comprising a proximal communication network and a distal communication network, comprising:
- means for receiving a communication request for transmitting communication data from said proximal network to said distal network;
- processing means for determining a network parameter in said distal network;
- means for transmitting said communication data from said proximal communication network to said distal communication network;
wherein the transmission of the communication data is effected if said network parameter is determined to be allowable.

9. A module according to claim 8, wherein the network parameter is a distal communication network failure indicator.

10. A module according to any one of claim 8 or 9, further comprising storage means adapted for storing historical communication information.

11. A module according to claim 10 when dependant upon claim 8, wherein the network parameter is based upon a success criterion of historical communication transmission information effected between said proximal communication network and said distal communication network, said historical communication information being stored in the storage means.

12. A communication network comprising a module according to any one of claims 8 to 11.

13. A communication network according to claim 12, comprising an IP Multimedia Subsystem (IMS) network.

14. A communication network according to claim 13, where the module is part of the Proxy Call Session Control Function (P-CSCF) of the proximal communication Network.
